# EUROPÄISCHE PATENTSCHRIFT

(11) **EP 0 811 022 B1**
(45) Veröffentlichungstag und Bekanntmachung des Hinweises auf die Patenterteilung: **10.05.2000**
(21) Anmeldenummer: 96904070.8
(22) Anmeldetag: 13.02.1996
(51) Int. Cl.: C08F 12/02, C08F 4/64

(54) **POLYMERE ENTHALTENDE KATALYSATORSYSTEME**
POLYMER-CONTAINING CATALYST SYSTEMS
SYSTEMES CATALYSEURS CONTENANT DES POLYMERES

(30) Priorität: 24.02.1995 DE 19506553
(43) Veröffentlichungstag der Anmeldung: 10.12.1997
(73) Patentinhaber: BASF AKTIENGESELLSCHAFT, 67056 Ludwigshafen (DE)
(72) Erfinder: WÜNSCH, Josef, D-67105 Schifferstadt (DE); MAIER, Walter, D-68161 Mannheim (DE)
(86) Internationale Anmeldenummer: EP9600597
(87) Internationale Veröffentlichungsnummer: WO9626226

(56) Entgegenhaltungen:
- EP-A- 0 008 409
- EP-A- 0 206 794
- EP-A- 0 535 582
- DE-A- 2 412 105

## Beschreibung

Die vorliegende Erfindung betrifft Katalysatorsysteme der allgemeinen Formel I

XM(Z¹)_{z₁}(Z²)_{z₂}(Z³)_{z₃} I

in der die Substituenten und Indices folgende Bedeutung haben:
- X: C₁- bis C₁₀-Alkyl, 5- bis 7-gliedriges Cycloalkyl, C₁- bis C₁₀-Alkoxy, C₆- bis C₁₅-Aryl oder Verbindungen der allgemeinen Formel II 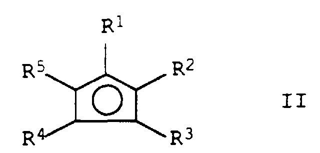 mit
- R¹ bis R⁵: Wasserstoff, C₁- bis C₁₀-Alkyl, das 1- bis 5fach mit Halogen substituiert sein kann, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Halogen, C₁- bis C₁₀-Alkoxy, NR⁶R⁷ oder Si(R⁶)₃,
mit
- R⁶ und R⁷: Wasserstoff, C₁- bis C₁₀-Alkyl, C₆- bis C₁₅-Aryl oder C₃- bis C₁₀-Cycloalkyl,
- M: ein Metall der II. bis VIII. Nebengruppe des Periodensystems der Elemente
- Z¹ bis Z³: Polymere von vinylaromatischen Verbindungen, Dienen, Acrylaten oder deren Mischungen
und
- z₁ bis z₃: 0, 1, 2 oder 3, wobei 1 ≤ z₁+z₂+z₃ ≤ 3 ist,
erhältlich dadurch, daß man die zu den Polymeren Z¹ bis Z³ führenden vinylaromatischen Verbindungen, Diene, Acrylate oder deren Mischungen anionisch polymerisiert und dann mit einem Übergangsmetallsalz der allgemeinen Formel IV

XMY_{y} IV

- mit Y: Fluor, Chlor, Brom oder Jod
- und y: 1, 2 oder 3
umsetzt.

Weiterhin betrifft die vorliegende Erfindung Verfahren zur Herstellung derartiger Katalysatorsysteme sowie deren Verwendung zur Herstellung von Polymerisaten von vinylaromatischen Verbindungen.

Katalysatorsysteme, die Übergangsmetalle als aktives Katalysatorzentrum enthalten, werden großtechnisch vielfach zur Herstellung von Polymerisaten eingesetzt.

So sind aus D.S. Breslow, N.R. Newburg, J. Am. Chem. Soc. 1959, 81, S. 81-86 homogene Ziegler-Natta-Katalysatoren bekannt.

Die EP-A 416 815 beschreibt Metallocene, bei denen zwei aromatische Liganden über Kohlenstoff- oder Silylgruppen verbrückt sind.

Weiterhin sind aus der DE-A 43 03 647 donorhaltige Katalysatorsysteme bekannt.

Diese bekannten Katalysatorsysteme können auch geträgert vorliegen. Nachteilig bei diesen bekannten Systemen ist, daß der Massentransport an und durch den Träger begrenzt ist, daß für einige Anwendungen die Selektivität zu niedrig ist und daß nur ein relativ geringer Teil der vorhandenen Metallzentren katalytisch aktiv ist.

Der vorliegenden Erfindung lag daher die Aufgabe zugrunde, neue Katalysatorsysteme zur Verfügung zu stellen, die die genannten Nachteile nicht zeigen, die insbesondere gut vom entstandenen Polymerisat abtrennbar sind und leicht aktiviert werden können.

Demgemäß wurden die eingangs definierten Katalysatorsysteme gefunden.

Weiterhin wurden Verfahren zur Herstellung derartiger Katalysatorsysteme gefunden sowie deren Verwendung zur Herstellung von Polymerisaten von vinylaromatischen Verbindungen.

Von den erfindungsgemäßen Katalysatorsystemen der allgemeinen Formel I

XM(Z¹)_{z₁} (Z²)_{z₂} (Z³)_{z₃} I

sind diejenigen bevorzugt, in denen X für C₁- bis C₄-Alkyl, insbesondere Methyl und Ethyl, C₁- bis C₄-Alkoxy oder besonders bevorzugt für Verbindungen der allgemeinen Formel II 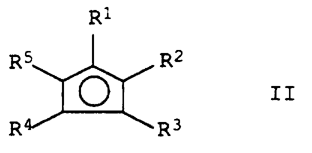 steht.

Von den Verbindungen der allgemeinen Formel II sind diejenigen bevorzugt, in denen R¹ bis R⁵ Wasserstoff, C₁- bis C₄-Alkyl, insbesondere Methyl, C₆- bis C₁₅-Aryl, insbesondere Phenyl und Biphenyl, bedeutet oder wobei zwei benachbarte Reste gemeinsam für 4 bis 15 C-Atome aufweisende cyclische Gruppen stehen, beispielsweise steht X dann für Indenyl, Benzindenyl oder Fluorenyl, wobei diese wiederum mit Alkylresten substituiert sein können.

Besonders bevorzugt steht X für Pentamethylcyclopentadienyl.

Für den Fall, daß X für Verbindungen der allgemeinen Formel II steht, stellen die erfindungsgemäßen Katalysatorsysteme Halbsandwichkomplexe dar.

Das Metall M steht vorzugsweise für Elemente der IV. bis VI. Nebengruppe des Periodensystems, insbesondere für Elemente der IV. Nebengruppe, also für Titan, Zirkonium und Hafnium, bevorzugt für Titan.

Z¹ bis Z³ stehen für Polymere von vinylaromatischen Verbindungen, Dienen wie Butadiene oder Isopren, Acrylaten, vorzugsweise mit 1 bis 6 C-Atomen im Esterrest, insbesondere Butylacrylat oder deren Mischungen, so daß Z¹ bis Z³ dann Copolymerisate darstellen.

Bevorzugt stehen Z¹ bis Z³ für Polymere von vinylaromatischen Verbindungen der allgemeinen Formel III 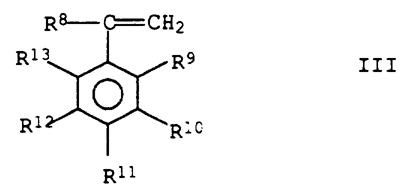 in der die Substituenten folgende Bedeutung haben:
- R⁸: Wasserstoff oder C₁- bis C₄-Alkyl,
- R⁹ bis R¹³: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt sind vinylaromatische Verbindungen der Formel III, in denen
- R⁸: Wasserstoff bedeutet
und
- R⁹ bis R¹³: für Wasserstoff, C₁- bis C₄-Alkyl, Chlor oder Phenyl stehen oder wobei zwei benachbarte Reste gemeinsam für 4 bis 15 C-Atome aufweisende cyclische Gruppen stehen, so daß sich als Verbindungen der allgemeinen Formel III beispielsweise Naphthalinderivate oder Anthracenderivate ergeben.

Beispiele für solche bevorzugten Verbindungen sind:

Styrol, p-Methylstyrol, p-Chlorstyrol, 2,4-Dimethylstyrol, 4-Vinylbiphenyl, 2-Vinylnaphthalin oder 9-Vinylanthracen.

Besonders bevorzugte vinylaromatische Verbindungen sind Styrol und p-Methylstyrol.

Die Herstellung von vinylaromatischen Verbindungen der allgemeinen Formel III ist an sich bekannt und beispielsweise in Beilstein **5**, 367, 474, 485 beschrieben.

Vorzugsweise sind Z¹ bis Z³ Polymere aus den gleichen Verbindungen, besonders bevorzugt Polystyrole. Die Molekulargewichte Mₙ (Zahlenmittelwert) von Z¹ bis Z³ liegen jeweils i.a. im Bereich von 500 bis 10⁸ g/mol, vorzugsweise im Bereich von 10³ bis 10⁶ g/mol.

Ein besonders bevorzugtes erfindungsgemäßes Katalysatorsystem ist dasjenige, bei dem X für Pentamethylcyclopentadienyl steht, M für Titan und Z¹ bis Z³ Polystyrole bedeuten.

Die Anzahl z₁, z₂, z₃ der jeweiligen Polymere Z¹, Z², Z³ hängt wesentlich vom Metall M ab. Für den bevorzugten Fall, daß M ein Metall der IV. Nebengruppe des Periodensystems der Elemente ist, ist die Summe z₁+z₂+z₃ vorzugsweise 3.

Die Polymere Z¹ bis Z³ sind in den erfindungsgemäßen Katalysatorsystemen kovalent an das Metall M gebunden.

Die erfindungsgemäßen Katalysatorsysteme der allgemeinen Formel I können dadurch hergestellt werden, daß die zu den Polymeren Z¹ bis Z³ führenden vinylaromatischen Verbindungen, Diene, Acrylate oder deren Mischungen anionisch polymerisiert und dann mit einem Übergangsmetallsalz der allgemeinen Formel IV

XMY_{y} IV

- mit Y: Fluor, Chlor, Brom oder Jod
- mit y: 1, 2 oder 3
umgesetzt werden.

Die anionische Polymerisation von vinylaromatischen Verbindungen, Dienen, Acrylaten oder deren Mischungen ist an sich bekannt und in Maurice Morton, Anionic Polymerization: Principles and Practice, Academic Press, 1983, beschrieben. Üblicherweise erfolgt die anionische Polymerisation durch Zugabe von Alkalimetallverbindungen, beispielsweise Phenyllithium, Natriummethylat, n-Butyllithium oder sec.-Butyllithium zu dem Monomeren. Zu diesen noch lebenden, anionischen Polymeren wird dann ein Übergangsmetallsalz der allgemeinen Formel IV hinzugegeben. Von diesen Salzen sind diejenigen bevorzugt, in denen Y für Chlor oder Brom, insbesondere für Chlor steht.

Bezüglich der bevorzugten Verbindungen, die zu den Polymeren Z¹ bis Z³ führen sowie des Substituenten X und des Metalls M in der allgemeinen Formel IV gilt das bei den Katalysatorsystemen der allgemeinen Formel I Gesagte.

Die Reaktionsbedingungen sind an sich nicht kritisch. Die Reaktionstemperatur liegt i.a. im Bereich von -75 bis 150°C, bevorzugt von -10 bis 100°C.

Die molare Menge an Übergangsmetallsalz beträgt vorzugsweise 0,001 bis 2,0 Mol-Äquivalente, bezogen auf die Menge an Alkalimetallverbindungen bei der anionischen Polymerisation.

Es hat sich als geeignet erwiesen, wenn das Übergangsmetallsalz der allgemeinen Formel IV in einem inerten Lösungsmittel gelöst ist. Als Lösungsmittel eignen sich Kohlenwasserstoffe wie Pentan oder Hexan, Benzol, Toluol, Xylole, Ether wie Diethylether oder Tetrahydrofuran oder deren Gemische.

Die erfindungsgemäßen Katalysatorsysteme eignen sich zur Herstellung von Polymerisaten von vinylaromatischen Verbindungen und zeichnen sich dadurch aus, daß sie sich gut vom entstandenen Polymerisat abtrennen lassen, leicht aktiviert werden können und technisch einfach herstellbar sind.

### Beispiel

### Herstellung von Pentamethylcyclopentadienyl-tris-(polystyryl)titanat

Unter Inertgasatmosphäre wurden in einem 500 ml Kolben 31,25 g (0,3 mol) unstabilisiertes Styrol in 200 ml n-Hexan gelöst und auf 60°C erwärmt.

Zu dieser Mischung wurden dann bei 60°C 60 mmol sec.-Butyllithium gegeben und unter Inertgasatmosphäre 1 Stunde polymerisiert.

Anschließend wurde diese Mischung zu 5,0 g (18,22 mmol) Pentamethylcyclopentadienyltitantrichlorid in 125 ml n-Hexan gegeben und auf 0°C gekühlt. Dann wurde 12 Stunden bei Raumtemperatur gerührt. Das entstandene Produkt wurde unter Inertgasatmosphäre filtriert und aus n-Hexan umkristallisiert. Der filtrierte Rückstand wurde bei 40°C für 4 Stunden am Vakuum getrocknet.
Ausbeute: 23,5 g (68 %)
Farbe: violett-blau
¹³C-NMR: (d₈-THF) δ = 14,5 ppm [CH₃];
δ = 25,7 ppm; 27,7; 32,5 [CH₂];
δ = 41,4 ppm; 41,5 [CH];
δ = 64,7 ppm [Ti-CH];
δ = 126,2; 126,5; 128,5; 128,8 [Aryl-CH];
δ = 132,3; 134,7; 137,9 [Cp-C];
δ = 146,2; 146,7 [Aryl-C]

Durch die magnetische Absorption bei δ=64,7 ppm läßt sich die kovalente Titan-Methin-Einheit der Polystyrylketten belegen.

## Patentansprüche

1. Katalysatorsysteme der allgemeinen Formel I
XM(Z¹)_{z₁} (Z²)_{z₂} (Z³) _{z₃} I
in der die Substituenten und Indices folgende Bedeutung haben:
X C₁- bis C₁₀-Alkyl, 5- bis 7-gliedriges Cycloalkyl, C₁- bis C₁₀-Alkoxy, C₆- bis C₁₅-Aryl oder Verbindungen der allgemeinen Formel II 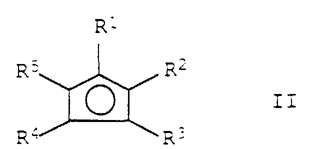 mit
R¹ bis R⁵ Wasserstoff, C₁- bis C₁₀-Alkyl, das 1- bis 5fach mit Halogen substituiert sein kann, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Halogen, C₁- bis C₁₀-Alkoxy, NR⁶R⁷ oder Si(R⁶)₃,
mit
R⁶ und R⁷ Wasserstoff, C₁- bis C₁₀-Alkyl, C₆- bis C₁₅-Aryl oder C₃- bis C₁₀-Cycloalkyl,
M ein Metall der II. bis VIII. Nebengruppe des Periodensystems der Elemente
Z¹ bis Z³ Polymere von vinylaromatischen Verbindungen, Dienen, Acrylaten oder deren Mischungen
und
z₁ bis z₃ 0, 1, 2 oder 3, wobei 1 ≤ z₁+z₂+z₃ ≤ 3 ist,
erhältlich dadurch, daß man die zu den Polymeren Z¹ bis Z³ führenden vinylaromatischen Verbindungen, Diene, Acrylate oder deren Mischungen anionisch polymerisiert und dann mit einem Übergangsmetallsalz der allgemeinen Formel IV
XMY_{y} IV
mit Y Fluor, Chlor, Brom oder Jod
und y 1, 2 oder 3
umsetzt.

2. Katalysatorsysteme nach Anspruch 1, dadurch gekennzeichnet, daß X für Verbindungen der allgemeinen Formel II steht.

3. Katalysatorsysteme nach den Ansprüchen 1 bis 2, dadurch gekennzeichnet, daß M für Metalle der IV. bis VI. Nebengruppe des Periodensystems der Elemente steht.

4. Katalysatorsysteme nach den Ansprüchen 1 bis 3, dadurch gekennzeichnet, daß Z¹ bis Z³ für Polymere von vinylaromatischen Verbindungen der allgemeinen Formel III 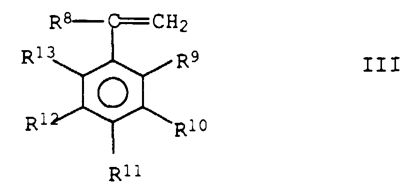 in der die Substituenten folgende Bedeutung haben:
R⁸ Wasserstoff oder C₁- bis C₄-Alkyl,
R⁹ bis R¹³ unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende Gruppen stehen,
stehen.

5. Verfahren zur Herstellung von Katalysatorsystemen gemäß den Ansprüchen 1 bis 4, dadurch gekennzeichnet, daß man die zu den Polymeren Z¹ bis Z³ führenden vinylaromatischen Verbindungen, Diene, Acrylate oder deren Mischungen anionisch polymerisiert und dann mit einem Übergangsmetallsalz der allgemeinen Formel IV
XMY_{y} IV
mit Y Fluor, Chlor, Brom oder Jod
und y 1, 2 oder 3
umsetzt.

6. Verfahren nach Anspruch 5, dadurch gekennzeichnet, daß das Übergangsmetallsalz IV in einem inerten Lösungsmittel gelöst wird.

7. Verwendung von Katalysatorsystemen gemäß den Ansprüchen 1 bis 4 zur Herstellung von Polymerisaten von vinylaromatischen Verbindungen.

## Claims

1. A catalyst system of the formula I
XM(Z¹)_{z₁} (Z²)_{z₂} (Z³)_{z₃} I
where the substituents and indices have the following meanings:
X is C₁-C₁₀-alkyl, 5- to 7-membered cycloalkyl, C₁-C₁₀-alkoxy, C₆-C₁₅-aryl or a compound of the formula II 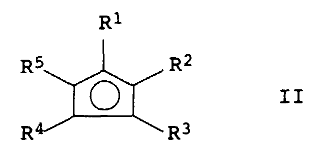 where
R¹ to R⁵ are hydrogen, C₁-C₁₀-alkyl which may bear from 1 to 5 halogen substituents, 5- to 7-membered cycloalkyl which may in turn bear C₁-C₆-alkyl groups as substituents, C₆-C₁₅-aryl or arylalkyl, where two adjacent radicals may also together form a cyclic group having from 4 to 15 carbon atoms, or halogen, C₁-C₁₀-alkoxy, NR⁶R⁷ or Si(R⁶)₃,
and R⁶ and R⁷ are hydrogen, C₁-C₁₀-alkyl, C₆-C₁₅-aryl or C₃-C₁₀-cycloalkyl,
M is a metal of transition groups II to VIII of the Periodic Table of the Elements,
Z¹ to Z³ are polymers of vinylaromatic compounds, dienes, acrylates or their mixtures
and
z₁ to z₃ are 0, 1, 2 or 3, where 1 ≤ z₁+z₂+z₃ ≤ 3
and obtainable by anionically polymerizing the vinylaromatic compounds, dienes, acrylates or mixtures thereof which lead to the polymers Z¹ to Z³ and then reacting the reaction mixture with a transition metal salt of the formula IV
XMY_{y} IV
where Y is fluorine, chlorine, bromine or iodine
and y is 1, 2 or 3.

2. A catalyst system as claimed in claim 1, wherein X is a compound of the formula II.

3. A catalyst system as claimed in claim 1 or 2, wherein M is a metal of transition groups IV to VI of the Periodic Table of the Elements.

4. A catalyst system as claimed in any of claims 1 to 3, wherein Z¹ to Z³ are polymers of vinylaromatic compounds of the formula III 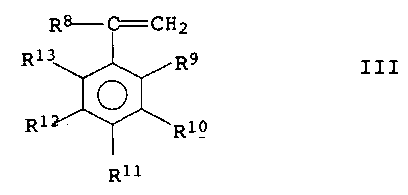 where the substituents have the following meanings:
R⁸ is hydrogen or C₁-C₄-alkyl,
R⁹ to R¹³ are, independently of one another, hydrogen, C₁-C₁₂-alkyl, C₆-C₁₈-aryl, halogen or two adjacent radicals together form a group having from 4 to 15 carbon atoms.

5. A process for preparing a catalyst system as claimed in any of claims 1 to 4, which comprises anionically polymerizing the vinylaromatic compounds, dienes, acrylates or mixtures thereof which lead to the polymers Z¹ to Z³ and then reacting the reaction mixture with a transition metal salt of the formula IV
XMY_{y} IV
where Y is fluorine, chlorine, bromine or iodine
and y is 1, 2 or 3.

6. A process as claimed in claim 5, wherein the transition metal salt IV is dissolved in an inert solvent.

7. Use of a catalyst system as claimed in any of claims 1 to 4 for preparing polymers of vinylaromatic compounds.

## Revendications

1. Systèmes catalytiques de la formule générale I
XM(Z¹)_{z1}(Z²)_{z2}(Z³)_{z3} I
dans laquelle les substituants et indices ont la signification suivante:
X représente un radical alkyle en C₁ à C₁₀, cycloalkyle pentagonal à hexagonal, alcoxy en C₁ à C₁₀, aryle en C₆ à C₁₅ ou des composés de la formule générale II 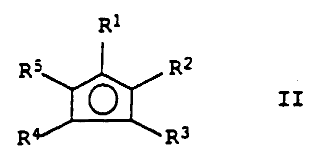 dans laquelle
R¹ à R⁵ représentent l'hydrogène, un radical alkyle en C₁ à C₁₀, qui peut être substitué de 1 à 5 fois par un halogène, cycloalkyle pentagonal à heptagonal, qui peut à son tour porter des radicaux alkyle en C₁ à C₆ comme substituants, arylalkyle ou aryle en C₆ à C₁₅, ou bien où deux restes voisins peuvent aussi éventuellement former des groupes cycliques comportant de 4 à 15 atomes de carbone, ou un halogène, un radical alcoxy en C₁ à C₁₀, NR⁶R⁷ ou Si(R⁶)₃,
où R⁶ et R⁷ représentent l'hydrogène, un radical alkyle en C₁ à C₁₀, aryle en C₆ à C₁₅ ou cycloalkyle en C₃ à C₁₀,
M représente un métal des sous-groupes II à VIII du système périodique des éléments,
Z¹ à Z³ représentent des polymères de composés vinylaromatiques, diènes, acrylates ou de leurs mélanges,
et
z₁ à z₃ sont égaux à 0, 1, 2 ou 3, avec 1≤z₁+z₂+z₃≤3,
que l'on peut obtenir par polymérisation anionique des composés vinylaromatiques, diènes, acrylates ou leurs mélanges conduisant aux polymères Z¹ à Z³, puis réaction avec un sel de métal de transition de la formule générale IV
XMY_{y} IV
dans laquelle
Y représente le fluor, le chlore, le brome ou l'iode,
et y est égal à 1, 2 ou 3.

2. Systèmes catalytiques selon la revendication 1, caractérisés en ce que X représente des composés de la formule générale II.

3. Systèmes catalytiques selon les revendications 1 à 2, caractérisés en ce que M représente un métal des sous-groupes IV à VI du système périodique des éléments.

4. Systèmes catalytiques selon les revendications 1 à 3, caractérisés en ce que Z¹ à Z³ représentent des polymères de composés vinylaromatiques de la formule générale III 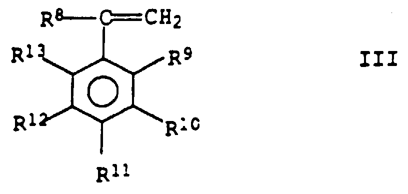 dans laquelle les substituants ont la signification suivante:
R⁸ représente l'hydrogène ou un radical alkyle en C₁ à C₄,
R⁹ à R¹³ représentent, indépendamment les uns des autres, l'hydrogène, un radical alkyle en C₁ à C₁₂, aryle en C₆ à C₁₈, halogène, ou bien deux restes voisins forment conjointement des groupes cycliques comportant de 4 à 15 atomes de carbone.

5. Procédé de préparation de systèmes catalytiques selon les revendications 1 à 4, caractérisé en ce que l'on opère une polymérisation anionique des composés vinylaromatiques, diènes, acrylates ou leurs mélanges conduisant aux polymères Z¹ à Z³, suivie d'une réaction avec un sel de métal de transition de la formule générale IV
XMY_{y} IV
où Y représente le fluor, le chlore, le brome ou l'iode
et y est égal à , 2 ou 3.

6. Procédé selon la revendication 5, caractérisé en ce que le sel de métal de transition IV est dissous dans un solvant inerte.

7. Utilisation de systèmes catalytiques selon les revendications 1 à 4 pour la préparation de polymères de composés vinylaromatiques.
